# EUROPÄISCHE PATENTSCHRIFT

(11) **EP 4 268 127 B1**
(45) Veröffentlichungstag und Bekanntmachung des Hinweises auf die Patenterteilung: **05.02.2025**
(21) Anmeldenummer: 21844275.4
(22) Anmeldetag: 21.12.2021
(51) Int. Cl.: B25J 9/16, B25J 13/08, G06K 19/06

(54) **ZIELMARKE ZUR BESTIMMUNG EINER DREIDIMENSIONALEN POSE EINES OBJEKTS**
TARGET MARK FOR DETERMINING A THREE-DIMENSIONAL POSE OF AN OBJECT
MARQUE CIBLE POUR DÉTERMINER UNE POSE TRIDIMENSIONNELLE D'UN OBJET

(30) Priorität: 23.12.2020 DE 102020134898
(43) Veröffentlichungstag der Anmeldung: 01.11.2023
(73) Patentinhaber: SensoPart Industriesensorik GmbH, 79695 Wieden (DE)
(72) Erfinder: PANNEKAMP, Jens, 79224 Umkirch (DE); KULT, Dominik, 79252 Stegen (DE)
(74) Vertreter: mepat Patentanwälte
(86) Internationale Anmeldenummer: PCT/EP2021/087143
(87) Internationale Veröffentlichungsnummer: WO 2022/136467

(56) Entgegenhaltungen:
- US-A1- 2015 224 650
- US-A1- 2020 125 872

## Beschreibung

Die Erfindung betrifft ein Verfahren zur Bestimmung einer dreidimensionalen Pose eines Objekts.

Zielmarken auf Bauteilen anzubringen ist aus dem Stand der Technik, etwa aus der DE 10 2016 011 653 A1, bekannt, die ein Robotersystem beschreibt, das mittels einer Zielmarke aus einfachen geometrischen Formen eine Position eines Zielpunktes einfach messen kann. Das System speichert Merkmalsgrößen eines Bildes einer Zielmarke, die in einem erfassten Bild enthalten sind, als Referenzdaten, wenn die Zielmarke in einer bekannten ersten Zielmarkenposition in dem Roboterkoordinatensystem angeordnet ist, und speichert die erste Zielmarkenposition im Verhältnis zu einem Arm-Ende als Position des Werkzeugmittelpunktes. Das System vergleicht die Merkmalsgrößen, die aus dem erfassten Bild erzielt werden, wenn die Zielmarke in einer zweiten Zielmarkenposition angeordnet ist, mit den Merkmalsgrößen der Referenzdaten, um zu bewirken, dass sich das Arm-Ende bewegt, und berechnet die zweite Zielmarkenposition in dem Roboterkoordinatensystem basierend auf einer zweiten Roboterposition, die der Position des Arm-Endes nach der Bewegung entspricht, und der Position des Werkzeugmittelpunktes. Zielmarken in Form von Identifikationsmarkern sind ferner in US 2015/224 650 A1 und US 2020/125 872 A1 beschrieben.

Die EP 2 523 017 A1 offenbart ein Kalibrierverfahren für ein in Polarkoordinaten messendes Gerät mit Scanfunktionalität, worin Winkelzielmarken in Form einfacher geometrischer Marker verwendet werden, um die Lage eines Bauteils im Raum zu bestimmen, indem die Winkelzielmarken mit einer optischen Sensoreinheit erfasst werden.

Ferner offenbart die WO 2020/102 761 A1 eine Visualisierungsmethode des menschlichen Körpers, wobei ein Körper eines Patienten vermessen werden kann, indem zweidimensionale Codes auf dessen Körper angebracht sind. Es geht darum, ein medizinisches Werkzeug in Bezug zu einem Patienten zu positionieren. Als zweidimensionale Codes sind 2D-Barcodes, QR-Codes oder AprilTags bekannt.

Bisher sind derartige Zielmarken reine Erkennungszeichen für Roboter mit Erfassungsvorrichtungen, wie optischen Sensoreinheiten, die diese Punkte auf dem Objekt (Bauteil) das erfasst und bearbeitet werden soll, erkennen und daraus auf die dreidimensionale Pose, d. h. auf die Position und Neigung (Freiheitsgrade der Translation und der Rotation) des jeweiligen Objekts schließen und dem Roboter zur Verfügung stellen. Die Bestimmung der dreidimensionalen Pose geschieht dabei durch Abgleich der vorab bekannten Geometrie der Zielmarke mit dem aufgenommenen Bild der Zielmarke unter Berücksichtigung einer vorab durchgeführten Kalibrierung der Sensoreinheit. Um einen Greifvorgang durchzuführen, müssen Greifposen relativ zu der Zielmarke eingelernt werden. Diese Greifposen sind objektspezifisch, womit sich der Einrichtungsaufwand mit wachsender Anzahl nicht gleicher Bauteile erhöht.

Ausgehend von diesem Stand der Technik ist es Aufgabe der vorliegenden Erfindung, ein Verfahren bereitzustellen, das eine verbesserte Bestimmung der dreidimensionalen Pose eines Objekts in Bezug zu einem Roboter ermöglicht.

Diese Aufgabe wird durch ein Verfahren mit den Merkmalen des Anspruchs 1 gelöst.

Weiterbildungen des Verfahrens sind in den Unteransprüchen ausgeführt.

Eine erste Ausführungsform des Verfahrens zur Bestimmung einer dreidimensionalen Pose eines Objekts verwendet eine optische Sensoreinheit zur Erfassung des Objekts, wobei die Sensoreinheit mit einer Datenverarbeitungseinheit verbunden ist, umfassend den Schritt:
- Bereitstellen einer Zielmarke für die Bestimmung einer dreidimensionalen Pose eines Objekts, wobei die Zielmarke eine vorbestimmte Anzahl Kodierungsmodule aufweist, die in einem definierten Modulmuster vorliegen, das eine Zeichenkette vorbestimmter Länge kodiert, die spezifische Informationen umfasst, die Objektparameter des Objekts definieren und ausgewählt sind aus einer Gruppe, die zumindest eine Größe der Zielmarke umfasst. In Kombination oder alternativ definieren die spezifischen Informationen Greifparameter zum Greifen des vorbestimmten Objekts; diese sind aus der Gruppe, die zumindest eine Greifpose eines Greifers, eine Greifergeometrie und Greiferkräfte umfasst, ausgewählt.

### Ferner umfassend die Schritte

- Anordnen der Zielmarke auf dem Objekt;
- Positionieren der optischen Sensoreinheit vor dem Objekt, so dass es in einem Erfassungsbereich der optischen Sensoreinheit liegt, und mittels der optischen Sensoreinheit Erfassen der Zielmarke auf dem Objekt;
- mittels der Datenverarbeitungseinheit Ermitteln des Zentrums des Modulmusters der Zielmarke und Auslesen der spezifischen Informationen;
- auf Grund der spezifischen Informationen in der Datenverarbeitungseinheit Bestimmen einer hypothetischen dreidimensionalen Pose der Zielmarke auf dem Objekt;
- Variieren der hypothetischen dreidimensionalen Pose der Zielmarke solange, bis das Zentrum des Modulmusters mit dem ermittelten Zentrum des Modulmusters übereinstimmt, hierdurch Ermitteln der tatsächlichen dreidimensionalen Pose der Zielmarke, die auf dem Objekt angeordnet ist, und damit auch Bestimmen der dreidimensionalen Pose des Objekts.

So können die spezifischen Informationen, die auf der erfindungsgemäßen Zielmarke kodiert sind, entweder Objektparameter oder Greifparameter enthalten. Alternativ umfassen die spezifischen Informationen eine Kombination aus Objektparameter und Greifparameter. Die Bestimmung einer dreidimensionalen Pose eines Objekts unter Verwendung der genannten Zielmarke, wobei die Zielmarke auf dem vorbestimmten Objekt angeordnet ist, erfolgt also unter Verwendung einer optischen Sensoreinheit zur Erfassung des Objekts, die mit einer Datenverarbeitungseinheit operativ gekoppelt ist. Die optische Sensoreinheit kann eine kalibrierte 2D-Kamera sein, wobei jedem Pixel der 2D-Kamera ein Bildstrahl im Raum zugeordnet ist, so dass eine Zuordnung zwischen Bildpunkt und physischen Objekten im Raum erfolgen kann sowie dass die Koordinatensysteme von Roboter, der das Objekt ansteuern soll, und Kamera miteinander abgeglichen sind.

"Dreidimensionale Pose" meint hierin die Werte der drei Freiheitsgrade der Translation und auch die Werte der drei Freiheitsgrade der Rotation, womit Position und Neigung oder auch Winkelstellung eines Objekts relativ zu einem Roboter oder Roboter-Arm sind.

"Zeichenkette" meint hierin eine Sequenz aus alphanumerischen Zeichen, die rein aus Ziffern bzw. Buchstaben oder einer Kombination aus beiden bestehen kann. Die Zeichenkette kann durchnummeriert sein, und jede Position der Zeichenkette einer spezifischen Information zugeordnet.

"Größe der Zielmarke" meint hierin das Rastermaß des Modulmusters.

Die in die Zielmarke einkodierbaren spezifischen Informationen können dabei objektspezifisch beliebig erweitert werden. Ein vorheriges Einlernen von Greifposen, wie es der Stand der Technik erfordert, ist nicht notwendig, da die Zielmarke alle für das Erkennen und/oder Greifen des Objekts erforderlichen Informationen selbst mitbringt. Das Objekt muss daher nicht vorbekannt sein, sondern kann anhand der in der Zielmarke einkodierten Informationen erkannt und gegriffen werden. Das Modulmuster gibt die kodierte Zeichenkette vorbestimmter Länge an, wobei die spezifischen Informationen eben an vorbestimmten Positionen kodiert sein können. Vorteilhaft ermöglicht die erfindungsgemäße Zielmarke die dreidimensionale Objektpose, also die Position, Winkeleinstellung und Geometrie des Objekts absolut im Raum zu erkennen, ohne die Größe der Zielmarke vorab zu kennen. Aus der Zielmarke kann direkt auf die Größenangaben des Modulmusters geschlossen werden. Es ist die physikalische Größe der Zielmarke, d. h., das Rastermaß der Module hineinkodiert, was eine Lokalisierung des Objekts bzw. dessen Pose mit Zielmarken in unterschiedlichen Größen möglich macht, ohne dass eine externe Größenabfrage oder ein vorheriges Einlernen der Größenangabe notwendig ist. Dies ist besonders hilfreich, wenn die Zielmarken in Form von 2D-Codes auf einer großen Zahl und in unterschiedlichen Code-Größen auf den Objekten angebracht sind, sind die Zahl der Objekte oder die Modulgrößen nicht von vorne herein festgelegt, was die Erkennung der Objekte wesentlich erleichtert.

Ferner sind die verschiedenen Greifparameter eines Objekts in die Zielmarke einkodiert für verbessertes Greifen von Objekten. Die Greifpose eines Greifers beinhaltet auch die Ausrichtung sowie die Abmessungen, wie weit ein Greifer geöffnet werden sollte, um das Objekt zu greifen. Ferner kann ausgehend von der Position der Zielmarke auf dem Objekt ein Versatz zu einem Greifpunkt des Objekts als relative Greifpose einkodiert sein oder auch die Schließkräfte hinterlegt sein. Das Greifen kann mit beliebigen Greifern erfolgen, bevorzugt mit speziellen Greifern wie Sauggreifern oder Backengreifern von Robotern oder Roboter-Armen. In der Greifergeometrie, die ebenfalls einkodiert sein kann, können weitere Information in Bezug auf den Greifer hinterlegt werden, so z. B. der zu verwendende Greifertyp. Damit bringt das zu greifende Objekt bereits benötigte Parameter für den Greifvorgang mit, so dass diese Parameter nicht zuvor eingelernt werden müssen. Der Greifvorgang wird somit durch die Zielmarke unterstützt.

Die Zielmarken können als ECC200, QR-Code oder auch als AprilTag ausgestaltet sein. Diese Formen bieten eine optimale Basis für die Kodierung der unterschiedlichen Objektinformationen. Um eine gute Erkennbarkeit zu erzielen, können die Zielmarken als Direktmarkierung oder auf einem Träger befestigt sein. Eine Direktmarkierung ist insbesondere bei Serienbauteilen vorteilhaft, dort können die Zielmarken direkt auf oder in das Bauteil auf- oder eingedruckt, eingefräst oder gelasert sein. Die Variante des Codes auf einem Träger, wie bspw. auf einem Aufkleber oder einem anschraubbaren Plättchen, das die Zielmarke trägt, ist u. a. für Warenträger geeignet.

In einer weiteren Ausführungsform des erfindungsgemäßen Verfahrens sind die Modulmuster der Zielmarke in fortlaufender Nummerierung mit einer Identifikationsnummer kodiert, wodurch sie mit einer eindeutigen Identifikation ID versehen sind. Jeder Zielmarke können so eindeutig weitere Informationen zugeordnet werden, selbst wenn diese nicht im Code hinterlegt sind. So können bspw. die Greifparameter nicht direkt in der Zielmarke kodiert sein, sondern in einer extern hinterlegten Tabelle oder einer Datenbank (so. z. B. in einer Cloud) verfügbar sein und über die Identifikationsnummer verlinkt sein. Dies ist vorteilhaft insbesondere für Objekte, die eine gewisse Flexibilität im Greifvorgang erfordern. Es reicht dann aus, die ID zu bestimmen und die Modulgröße bzw. die weiteren Greifparameter dann aus der Datenbank auszulesen. Für die Zielmarke kann auch eine rein numerische Kodierung verwendet werden, wobei X Zeichen für die Identifikation ID, Y Zeichen für die Information "Modulgröße", Z Zeichen für die Information "relative Greifpose" usw. verwendet werden. Sollen mehr Informationen, also mehr Zeichen in der Zielmarke gespeichert werden, muss die Anzahl der Modulmuster bzw. der Kodierungsmodule wachsen; so kann ein 12 x 12-Zielmarke (bezogen auf die Kodierungsmodule) zehn Dezimalstellen kodieren. Für eine höhere Informationsdichte erfordert es eine entsprechend höhere Anzahl Kodierungsmodule.

In noch einer weiteren Ausführungsform des erfindungsgemäßen Verfahrens ist die Form der Zielmarke quadratisch oder kreisförmig. Ferner kann die Form der Modulmuster bzw. der Kodierungsmodule quadratisch oder kreisförmig sein. Insbesondere mit kreisförmigem Kodierungsmodulen oder auch Modulmustern wird eine präzise Zentrumsbestimmung der Codemodule erleichtert und die Rechendauer reduziert, die zur Positionsbestimmung benötigt wird.

Die Zielmarke kann in einer bevorzugten Ausführungsform des erfindungsgemäßen Verfahrens einen Hintergrund aufweisen, auf dem die Kodierungsmodule angeordnet sind.

Dieser Hintergrund ist bevorzugt ein optisch neutraler Hintergrund. "Neutral" meint hierin, dass der Hintergrund derart beschaffen ist, dass die Kodierungsmodule kontrastreich hervortreten können und daher von einer optischen Sensoreinheit gut erfasst werden können. Beispielhaft kann der Hintergrund eine weiße Fläche sein, auf der schwarze Kodierungsmodule vorliegen. Die Zielmarke gibt damit ein Hell-Dunkel-Muster vor, das einer Zeichenkette einer vorbestimmten Länge entspricht. Bei in das Objektmaterial eingebrachten Zielmarken können dies auch erhaben ausgebildete Kodierungsmodule vor einem bspw. ausgefrästen Hintergrund darstellen.

In noch einer weiteren Ausführungsform des erfindungsgemäßen Verfahrens sind die Kodierungsmodule retroreflektiv. Dies kann auch für den Hintergrund bzw. die gesamte Zielmarke gelten. Eine retroreflexive Ausgestaltung, die dem Katzenaugenprinzip entspricht, bietet den Vorteil, das bei in der optischen Sensoreinheit eingebauten Beleuchtungen größere Arbeitsabstände genutzt werden können, da das von der Beleuchtung ausgesandte Licht unabhängig vom Einfallswinkel wieder zur optischen Sensoreinheit zurückgeworfen wird.

Weitere Ausführungsformen des Verfahrens mit der Zielmarke sowie einige der Vorteile, die mit diesen und weiteren Ausführungsformen verbunden sind, werden durch die nachfolgende ausführliche Beschreibung unter Bezug auf die begleitenden Figuren deutlich und besser verständlich. Die Figuren sind lediglich eine schematische Darstellung einer Ausführungsform der Erfindung.

Dabei zeigen:
- **Fig. 1**: eine Zielmarke, und
- **Fig. 2**: eine schematische Anordnung der Zielmarke auf einem Objekt in einem Raum.

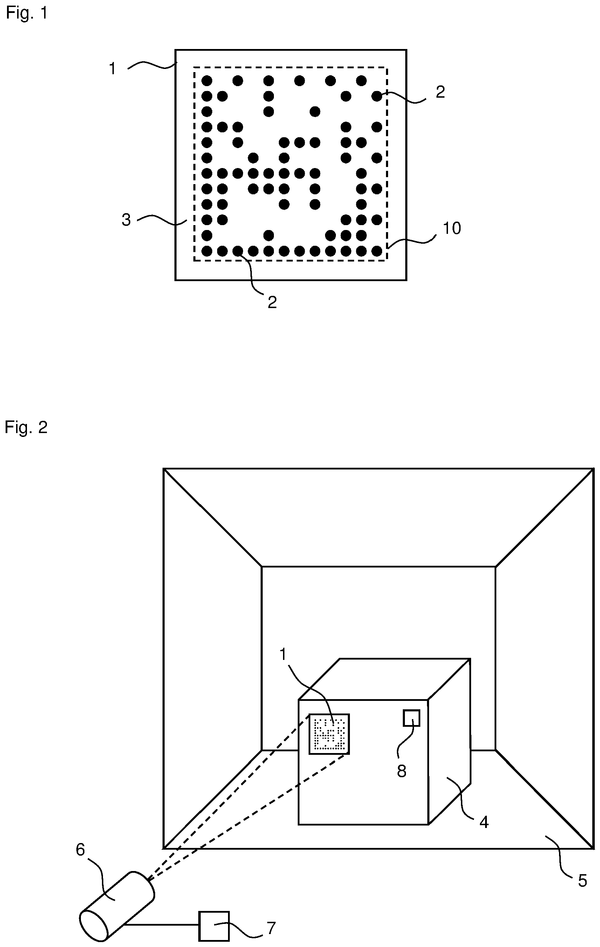

In der **Fig. 1** ist eine Zielmarke 1 dargestellt, die eine Vielzahl Kodierungsmodule 2 auf einem optisch neutralen Hintergrund 3 aufweist. Die Kodierungsmodule 2 sind derart angeordnet, dass sie bestimmte, spezifische Informationen kodiert wiedergeben. Die spezifischen Informationen, die auf der Zielmarke 1 kodiert werden können, enthalten entweder Objektparameter, wie z. B. eine Größe der Zielmarke 1, oder Greifparameter, die bspw. eine Greifpose eines Greifers, eine Greifergeometrie und Greiferkräfte umfassen. Alternativ umfassen die spezifischen Informationen eine Kombination aus Objektparameter und Greifparameter.

In der **Fig. 1** ist dies wie folgt, wobei in der dargestellten Zielmarke 1 nur Größenangaben der Zielmarke 1, aber keine Greifparameter des Objekts 4 kodiert sind.

Die Kodierungsmodule 2 der Zielmarke 1 sind in ein Modulmuster 10 zusammengefasst (beispielhaft gestrichelt umrandet in **Fig. 1**), die je zehn Dezimalziffern "1 bis 10" kodieren, wobei diesen zehn Ziffern "1 bis 10" beispielhaft folgende Bedeutungen zugeordnet sein können:
Die Ziffern "1" und "2" beispielsweise könnten einen Ziel-Subtyp angeben, bspw., den Objekttyp, der lokalisiert werden soll, oder sie geben eine weitere Information, die eine interne Verarbeitung der in der Zielmarke 1 kodierten Information erleichtert.

Die Ziffern "3" und "4" dienen dazu, eine Information über den Modulabstand zu geben (Rastermaß). Der Modulabstand wird beispielsweise durch zwei Dezimalziffern angegeben, die auf diese Weise auf Millimeter abgebildet werden, bspw. durch die Relation (X + 1) * 0.5, mit X der Millimeterangabe. Somit kann ein Bereich von 0,5 mm bis zu 50 mm durch X=0...99 kodiert werden.

Die Ziffern "5" bis "10" dieses Beispiels dienen zur Kodierung der Zielkennung (ID). Mit diesen fünf Dezimalstellen können eindeutige IDs für einige Millionen Zielmarken erzeugt werden. Wird auf den Subtyp verzichtet, können mit 8 Dezimalstellen 100 Millionen eindeutige Zielmarken erzeugt werden. Zielmarken mit mehr Kodierungsmodule bieten die Möglichkeit, noch größere Mengen an eindeutigen Zielmarken zu erzeugen.

In **Fig. 2** ist ein Objekt 4 in einem Raum 5 angeordnet. Die Zielmarke 1 ist auf dem Objekt 4 angebracht, wobei sie mittels optischer Sensorik 6 erkannt und mittels einer damit verbundenen Datenverarbeitungseinheit 7 ausgewertet werden kann. Die angebrachte Zielmarke 1 allein reicht aus, um die dreidimensionale Pose der Zielmarke 1 und der Greifparameter 4 in dem Raum 5 zu erkennen. Die Raumabmessungen oder weitere raumspezifische Parameter sind nicht erforderlich. Eine Greifposition für einen Greifer kann durch einen Greifpunkt 8, der in **Fig. 2** in Form einer Fahne dargestellt ist, gegeben sein. Der Greifpunkt 8 stellt einen guten Greifpunkt zum Greifen des Objekts 4 dar und ist mit einer korrespondierenden Relativpose in der Zielmarke 1 einkodiert.

### BEZUGSZEICHENLISTE

- 1: Zielmarke
- 2: Kodierungsmodul
- 3: Hintergrund
- 4: Objekt
- 5: Raum
- 6: Optische Sensoreinheit
- 7: Datenverarbeitungseinheit
- 8: Greifpunkt
- 10: Modulmuster

## Patentansprüche

1. Verfahren zur Bestimmung einer dreidimensionalen Pose eines Objekts (4) unter Verwendung einer optischen Sensoreinheit (6) zur Erfassung des Objekts (4), wobei die Sensoreinheit (6) mit einer Datenverarbeitungseinheit (7) verbunden ist, **umfassend die Schritte:**
- Bereitstellen einer Zielmarke (1) für die Bestimmung einer dreidimensionalen Pose eines Objekts (4), wobei die Zielmarke (1) Kodierungsmodule (2) aufweist, die in einem definierten Modulmuster (10) vorliegen, das eine Zeichenkette kodiert, die spezifische Informationen umfasst, die
- Objektparameter des Objekts (4), ausgewählt aus der Gruppe umfassend zumindest eine Größe der Zielmarke (1),
und/oder
- Greifparameter zum Greifen des vorbestimmten Objekts (4) aus der Gruppe umfassend zumindest eine Greifpose eines Greifers, eine Greifergeometrie und Greiferkräfte,
definieren,
- Anordnen der Zielmarke (1) auf dem Objekt (4);
- Positionieren der optischen Sensoreinheit vor dem Objekt, so dass es in einem Erfassungsbereich der optischen Sensoreinheit liegt, und mittels der optischen Sensoreinheit Erfassen der Zielmarke auf dem Objekt,
- mittels der Datenverarbeitungseinheit Ermitteln des Zentrums des Modulmusters der Zielmarke (1) und Auslesen der spezifischen Informationen,
- auf Grund der spezifischen Informationen in der Datenverarbeitungseinheit Bestimmen einer hypothetischen dreidimensionalen Pose der Zielmarke auf dem Objekt (4),
- Variieren der hypothetischen dreidimensionalen Pose der Zielmarke solange, bis das Zentrum des Modulmusters mit dem ermittelten Zentrum des Modulmusters übereinstimmt, hierdurch Ermitteln der tatsächlichen dreidimensionalen Pose der Zielmarke, die auf dem Objekt angeordnet ist, und damit auch Bestimmen der dreidimensionalen Pose des Objekts.

2. Verfahren nach Anspruch 1,
**dadurch gekennzeichnet, dass**
die Modulmuster (10) in fortlaufender Nummerierung kodiert sind, wobei die Nummerierung als eindeutige Identifikation (ID) ausgebildet ist.

3. Verfahren nach Anspruch 1 oder 2,
**dadurch gekennzeichnet, dass**
- die Form der Zielmarke (1) quadratisch oder kreisförmig ist, und/oder
- die Form der Modulmuster (10) und/oder der Kodierungsmodule (2) quadratisch oder kreisförmig sind/ist.

4. Verfahren nach zumindest einem der Ansprüche 1 bis 3,
**dadurch gekennzeichnet, dass**
die Zielmarke (1) einen Hintergrund (3) aufweist, auf dem die Kodierungsmodule (2) angeordnet sind.

5. Verfahren nach Anspruch 4,
**dadurch gekennzeichnet, dass**
die Kodierungsmodule (2) und/oder der Hintergrund (3) der Zielmarke (1) retroreflektiv sind.

## Claims

1. Method for determining a three-dimensional pose of an object (4) by using an optical sensor unit (6) for capturing the object (4), wherein the sensor unit (6) is connected to a data processing unit (7), **comprising the steps:**
- providing a target marker (1) for determining a three-dimensional pose of an object (4), wherein the target marker (1) has encoding modules (2) that are present in a defined module pattern (10) that encodes a character string comprising specific information that defines
- object parameters of the object (4) selected from the group comprising at least a size of the target marker,
and/or
- gripping parameters for gripping the predetermined object (4) selected from the group comprising at least one gripping pose of a gripper, a gripper geometry, and gripper forces,
- arranging the target marker (1) on the object (4);
- positioning the optical sensor unit in front of the object such that it is in a detection range of the optical sensor unit and, by means of the optical sensor unit, capturing the target marker on the object;
- determining the center of the module patterns of the target marker by means of the data processing unit, and reading out the specific information,
- determining a hypothetical three-dimensional pose of the target marker on the object (4) based on the specific information in the data processing unit,
- continuously varying the hypothetical three-dimensional pose of the target marker until the center of the module pattern coincides with the determined center of the module pattern, thereby determining the actual three-dimensional pose of the target marker.

2. Method according to claim 1,
**characterized in that**
the module patterns (10) are encoded in consecutive numbering, the numbering being in the form of a unique identification (ID).

3. Method according to claim 1 or 2,
**characterized in that**
- the shape of the target marker (1) is square or circular, and/or
- the shape of the module pattern (10) and/or the encoding modules (2) are/is square or circular.

4. Method according to at least one of claims 1 to 3,
**characterized in that**
the target marker (1) has a background (3) on which the encoding modules (2) are arranged.

5. Method according to claim 4,
**characterized in that**
the encoding modules (2) and/or the background (3) of the target marker (1) are retroreflective.

## Revendications

1. Procédé permettant de déterminer la pose tridimensionnelle d'un objet (4) en utilisant une unité de détection optique (6) pour détecter l'objet (4), l'unité de détection (6) étant reliée à une unité de traitement de données (7),
**comprenant les étapes suivantes :**
- mise à disposition d'une marque cible (1) pour déterminer la pose tridimensionnelle d'un objet (4), la marque cible (1) présentant des modules de codage (2) qui se trouvent dans un modèle de module défini (10), lequel code une chaîne de caractères comprenant des informations spécifiques qui définissent
- des paramètres de l'objet (4), sélectionnés dans le groupe comprenant au moins une grandeur de la marque cible (1),
et/ou
- des paramètres de préhension pour saisir l'objet (4) prédéterminé, dans le groupe comprenant au moins une pose de préhension d'un préhenseur, une géométrie de préhension et des forces de préhension,
- disposition de la marque cible (1) sur l'objet (4) ;
- positionnement de l'unité de détection optique devant l'objet de façon à ce que celui-ci se trouve dans une zone de détection de l'unité de détection optique, et détection de la marque cible sur l'objet au moyen de l'unité de détection optique,
- détermination du centre du modèle modulaire de la marque cible (1) et lecture des informations spécifiques au moyen de l'unité de traitement des données,
- détermination d'une pose tridimensionnelle hypothétique de la marque cible sur l'objet (4) sur la base des informations spécifiques dans l'unité de traitement des données,
- variation de la pose tridimensionnelle hypothétique de la marque cible jusqu'à ce que le centre du modèle modulaire coïncide avec le centre déterminé du modèle modulaire, ce qui permet de déterminer la pose tridimensionnelle réelle de la marque cible placée sur l'objet, et par conséquent de déterminer la pose tridimensionnelle de l'objet.

2. Procédé selon la revendication 1,
**caractérisé en ce que**
les modèles de module (10) sont codés en numérotation continue, la numérotation étant conçue comme un identifiant unique (ID).

3. Procédé selon la revendication 1 ou 2,
**caractérisé en ce que**
- la marque cible (1) est de forme carrée ou circulaire et/ou
- les modèles de module (10) et/ou les modules de codage (2) sont de forme carrée ou circulaire.

4. Procédé selon au moins l'une des revendications 1 à 3,
**caractérisé en ce que**
la marque cible (1) présente un fond (3) sur lequel sont disposés les modules de codage (2).

5. Procédé selon la revendication 4,
**caractérisé en ce que**
les modules de codage (2) et/ou le fond (3) de la marque cible (1) sont rétroréflectifs.
